# EUROPEAN PATENT SPECIFICATION

(11) **EP 1 829 006 B1**
(45) Date of publication and mention of the grant of the patent: **17.02.2010**
(21) Application number: 05818481.3
(22) Date of filing: 15.12.2005
(51) Int. Cl.: G08B 17/12, G08B 17/06, F02C 7/25, A62C 3/08

(54) **FIRE WARNING SYSTEM**
FEUERWARNSYSTEM
SYSTEME D'ALARME INCENDIE

(30) Priority: 21.12.2004 GB 0428016
(43) Date of publication of application: 05.09.2007
(73) Proprietor: Rolls-Royce plc, 65 Buckingham Gate London SW1E 6AT (GB)
(72) Inventor: GREGORY, Jonathan, Mark, Cheltenham, Glos GL53 9DT (GB)
(74) Representative: Tindall, Adam
(86) International application number: PCT/GB2005/004851
(87) International publication number: WO 2006/067389

(56) References cited:
- DE-B- 1 024 851
- GB-A- 659 452
- SU-A1- 1 584 616
- US-A1- 2004 109 415

## Description

The invention relates to fire warning systems.

In particular it concerns an engine bay fire warning system for an aircraft.

Known warning system arrangements usually employ at least one thin electrically conducting wire hung in the engine bay near the engine. The wire is outside the engine casing but forms part of an electric warning circuit. A breach of the engine casing by a fire destroys the electrical properties of the wire and thereby triggers an alarm circuit. A drawback of systems of this kind is that the warning signal is generated after a catastrophic failure has occurred. This is not a safe failure mode.

In the case of an aircraft engine the present invention seeks to avoid the above-mentioned drawback by detecting a change in radiated light emitted by the combustor casing consistent with incipient breach of the casing for example due to a combustor wall failure, the most common precursor to an engine casing overheat.

A method and apparatus for fire prevention in electronic equipment known from US Patent Application Publication 2004/0109415 A1 includes a radiation collecting system in an equipment cabinet or the like comprising a lens and a sensor array connected through a fibre optic guide arrangement to a remote processor. The sensor array is formed of a number of pixels, each of which provides an electrical value commensurate with the intensity of infrared radiation falling on the pixel. Variations in the arrangement include using a lens or lens array to collect radiation from areas of the cabinet. A controller interprets changes in the intensity of radiation received by each pixel and takes an appropriate action.

According to the present invention there is provided a fire warning system comprising a plurality of optical sensors arranged to monitor at least two zones around a monitored object, electric circuit means connected to receive signals from the sensors and to compare two or more of said signals, and in the event of a difference between the compared signals exceeding a predetermined amount to energize an alarm characterized in that the signals are compared to determine changes in the temperature difference between the monitored zones, and the monitored object is a combustion engine.

In a preferred form of the invention the different zones are on opposite sides of the monitored object.

According to a further aspect of the present invention each of the optical sensors comprises a lens positioned in the monitored zone and a remote light sensitive signal generator.

Preferably a fibre optic conductor is arranged to convey light from the lens to the remote signal generator.

According to a further aspect of the present invention the optical sensors are spaced apart around an engine in an aircraft engine bay.

The invention will now be described in greater detail with reference to the accompanying drawings that illustrate an example of how the invention may be carried into practice. In the figures of the drawings:
Figure 1 illustrates the position of a fibre optic lens for a remote light sensor inside the interior of a gas turbine engine combustor; and
Figure 2 illustrates how a plurality of sensors arranged as in Figure 1 is connected for fire detection.

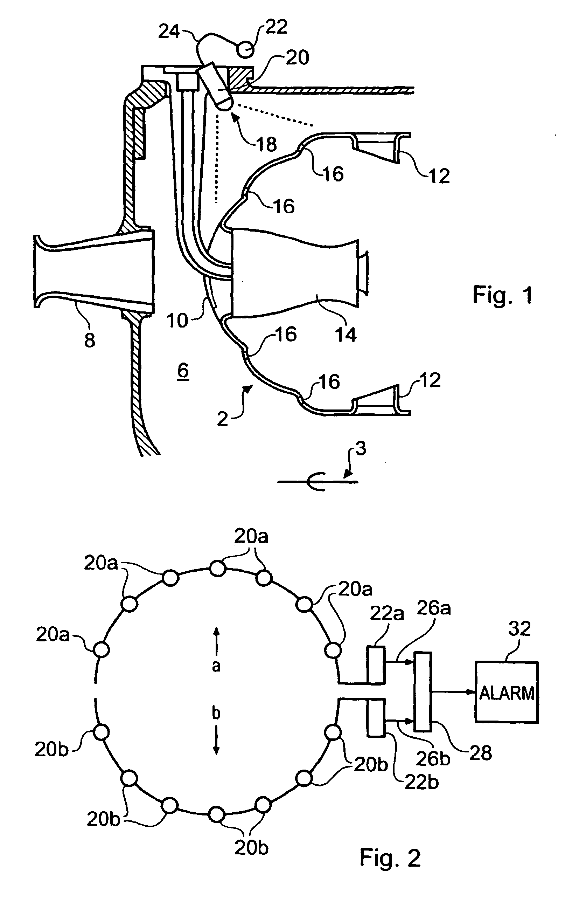

Referring firstly to Figure 1 there is shown a detail of a part cut-away view of the interior of a gas turbine engine combustor. The head end of part of the combustor chamber is indicated at 2. The overall shape of the combustor is annular and the whole shape of the chamber or inner casing is achieved by revolving the casing 2 about a centre line indicated at 3. Essentially this centre line is the axis of the engine. A cylindrical outer casing shown at 4 surrounds the inner casing.

Between the outer casing 4 and the inner casing 2 is a volume 6 into which the downstream end of a high pressure compressor outlet diffuser indicated at 8 supplies combustion and cooling air at high pressure. This diffuser outlet 8 provides an annular opening through which the entire air supply enters the combustor chamber volume. The air flow from the diffuser outlet 8 is directed at the head 10 of the combustor 2. Fuel is supplied to the interior of the combustor 2 through a number of fuel supply ducts 12 which feed a like number of fuel injectors such as the one indicated at 14.

Combustion air enters the combustion zone inside the casing 2 through a multiplicity of holes, a major proportion of the air enters through large holes, such as at 12, 14 spaced around the walls of casing 2, and through a number of smaller holes 16 distributed around the combustor head 10. These smaller holes help cool the combustor walls by generating a cooling film flow over the outer surface and by providing a cooler zone inside the head end which helps shield it from heat radiated from the combustion zone 18.

It will be appreciated that although high pressure air leaves the outlet 8 of the compressor at a temperature significantly hotter than ambient air it has considerable capacity for cooling the structure of the combustor 2. Thus the metallic structure 2 is maintained at a temperature much lower than combustion temperatures. Therefore the chamber structure emits radiation at a level dependent upon its temperature in the red to infra-red portion of the optical spectrum. The construction of the combustor chamber 2 is such that there is no direct line of sight of hot combustion gases from outside the chamber, so observed radiation levels are those of the structure alone and not those of the hot combustion gas within the chamber 2. An optical sensor positioned to monitor the exterior of chamber 2 will thus give a reading representative of the temperature of the cooled metallic structure. In the event that the temperature of the structure rises more than the limits of its operational variation a raised level in the sensor output will indicate the increase.

In accordance with the invention a plurality of optical sensors, one of which is indicated generally at 18, are spaced apart at intervals around the combustor chamber outer casing 4. In the illustrated example each sensor 18 comprises a lens 20 positioned in the monitored zone and a remote light sensitive signal generator 22 positioned outside the zone for protection and access. The lens 20 is positioned where it has a good, unobstructed view of the zone or object being monitored, in this case the head 10 of the combustor 2. In order to obtain complete coverage of the whole of the combustor head, given the field of view and position of each sensor, fourteen such sensors are required equidistantly spaced around the combustor casing. It will be understood that the number of sensors required depends upon several factors in particular: the field of view of a sensor, the distance of the light collecting lens from the monitored object, the size and shape of the object, just to mention a few.

In this example the optical sensors are arranged to compare the light levels received from two, semi-circular circumferential zones within the combustor module. As shown in Figure 2 the plurality of sensors 18 are divided into upper and lower semi-circular zones indicated by suffixes "a" and "b" respectively added to reference numerals. Each of the seven lens 20a in the upper semi-circular array "a" is linked through a common fibre optic cable 24a to a remote light sensitive signal generator 22a. Similarly the seven lens 20b in the lower semi-circular array "b" are linked through a fibre optic cable 24b to a remote light sensitive signal generator 22b. The two signal generators 22a, 22b produce electrical signal outputs 26a and 26b according to the intensity of light conducted by the respective fibre optic links 24a, 24b. The signals 26a, 26b are supplied to a comparator circuit 28, which compares the two signal levels to detect if, within a tolerance range, they are approximately equal or if they are significantly different. Within a normal operational spread the signals will not be exactly equal but, as is normal practice, both signals may be effectively set to a "zero" level so that subsequently comparator 28 is responsive to changes in the difference between received light levels form the two zones "a" and "b". The measurement of differences allows the system to cope with progressive signal loss from signal generators 22a and 22b due, for example, to soot accretion on the lens 18.

If a significant change occurs in the difference measured between zones "a" and "b" comparator 28 generates an output 30 that is operative to energise an alarm 32. The form of the alarm may be selected as appropriate for the operating environment.

It will be appreciated that the monitored zones mat be arranged differently. In the combustor module of the example there are two semi-circular monitored zones. It may be convenient or desirable to have more such zones. Obviously overlap of the monitored zones is to be avoided otherwise changes in signal differences will not be detected. However, systems employing more sophisticated logic than the simple version of the logic described here may be conceived. So in some systems involving a multiplicity of sensors overlapping may be permitted in order to identify incipient problem sites more accurately. There need not even be an even number of zones providing the electronic circuits that "compare" the light signals are appropriately modified or altered. So for a simple example, there could three monitored zones and therefore, nominally at least, three substantially equal signals to be compared. The comparator would be adapted to respond to a significant change of one zone relative to the other two.

The system has the advantage of detecting an incipient combustor failure prior to a catastrophic engine failure. It also has the advantage that it is passive, contains no moving parts and can be unobtrusively introduced to the combustor module. Furthermore, although the term "optical sensor" has been used above, the term is to be understood in a broad sense so as to embrace the sensing of emissions or radiation not only in the visible part of the spectrum but also, for example, in the infra-red range.

In other embodiments of the invention alternative to fibre optics may be employed to collect conduct light form the receiving lens to the signal generators. The sensors may be mounted individually so that each objective lens leads directly to its own signal generator, although this would be more expensive and potentially less reliable.

For the avoidance of misunderstanding, it must be mentioned that the sensors of the present invention are not intended to detect the normal combustion process per se, nor are they intended to provide an indication that a combustion process is proceeding efficiently or otherwise. The purpose of the invention is to provide an indication of abnormality or failure, incipient failure as well as actual failure, of the apparatus within which combustion is in process. Thus, in the event that the integrity of the outer wall of a combustion chamber (or other containment vessel) is in danger of failing the system of the present invention will initiate an alarm.

Although the invention has been described in relation to a gas turbine engine, in particular a gas turbine propulsion engine, it will be understood that it will find application in any environment or situation where fire efflux would present an undesirable failure case. Thus, for example the invention may be applied to any prime mover including gas turbine or internal combustion engines such as fitted to passenger vehicles, and also to furnaces.

## Claims

1. A fire warning system comprising a plurality of optical sensors (18) arranged to monitor at least two zones (a, b) around a monitored object (2), electric circuit means (28) connected to receive signals (26a, 26b) from the sensors (18) and to compare two or more of said signals (26a, 26b), and in the event of a difference between the compared signals (26a, 26b) exceeding a predetermined amount to energize an alarm (32) **characterized in that** the signals (26a, 26b) are compared to determine changes in the temperature difference between the monitored zones(a, b), and the monitored object is a combustion engine.

2. A fire warning system as claimed in claim 1 further **characterized in that** the different zones (a, b) are on opposite sides of the monitored object (2).

3. A fire warning system as claimed in claim 1 further **characterized in that** each of the optical sensors (18) comprises a lens (20) positioned in the monitored zone and a remote light sensitive signal generator (22).

4. A fire warning system as claimed in any one of claims 1 to 3 further **characterized in that** a fibre optic conductor (24) is arranged to convey light from the lens (20) to the remote signal generator (22).

5. A fire warning system as claimed in any preceding claim further **characterized in that** the optical sensors (18) are spaced apart around an engine in an aircraft engine bay.

6. A fire warning system as claimed in any preceding claim further **characterized in that** the monitored object (2) is a structure comprising part of any prime mover including gas turbine or internal combustion engines such as fitted to passenger vehicles.

7. A fire warning system as claimed in any of claims 1 to 4 further **characterized in that** the monitored object is a structure comprising part of a furnace.

## Patentansprüche

1. Feuerwarnsystem mit einer Mehrzahl optischer Sensoren (18), die so angeordnet sind, dass sie mindestens zwei Zonen (a, b,) um ein überwachtes Objekt (2) beobachten, elektrischen Schaltungsmitteln (28), die so verbunden sind, dass sie Signale (26a, 26b) von den Sensoren (18) empfangen und zwei oder mehr der genannten Signale (26a, 26b) vergleichen, und im Fall einer Differenz zwischen den verglichenen Signalen (26a, 26b), die ein vorgegebenes Maß überschreitet, einen Alarm (32) betätigen, **dadurch gekennzeichnet, dass** die Signale (26a, 26b) dahingehend verglichen werden, um Veränderungen in der Temperaturdifferenz zwischen den überwachten Zonen (a, b) zu bestimmen, und dass das überwachte Objekt eine Verbrennungsmaschine ist.

2. Feuerwarnsystem nach Anspruch 1, weiter **dadurch gekennzeichnet, dass** die verschiedenen Zonen (a, b) auf entgegengesetzten Seiten des beobachteten Objekts (2) liegen.

3. Feuerwarnsystem nach Anspruch 1, weiter **dadurch gekennzeichnet, dass** jeder der optischen Sensoren (18) eine Linse (20), die in der überwachten Zone positioniert ist, und einen entfernten lichtempfindlichen Signalgenerator (22) umfasst.

4. Feuerwarnsystem nach einem der Ansprüche 1 bis 3, weiter **dadurch gekennzeichnet, dass** ein faseroptischer Leiter (24) so angeordnet ist, dass er Licht von der Linse (20) zu dem entfernten Signalgenerator (22) leitet.

5. Feuerwarnsystem nach einem der vorhergehenden Ansprüche, weiter **dadurch gekennzeichnet, dass** die optischen Sensoren (18) um ein Triebwerk herum in einer Flugzeugtriebwerkszelle beabstandet angeordnet sind.

6. Feuerwarnsystem nach einem der vorhergehenden Ansprüche, weiter **dadurch gekennzeichnet, dass** das überwachte Objekt (2) eine Struktur ist, die Teil irgendeiner Antriebsmaschine einschließlich Gasturbinentriebwerken oder Motoren mit innerer Verbrennung ist, die an Passagierfahrzeugen angebracht ist.

7. Feuerwarnsystem nach einem der Ansprüche 1 bis 4, weiter **dadurch gekennzeichnet, dass** das überwachte Objekt eine Struktur ist, die Teil eines Ofens bildet.

## Revendications

1. Système d'alarme incendie comprenant une pluralité de capteurs optiques (18) agencés pour surveiller ou moins deux zones (a, b) situées autour d'un objet surveillé (2), un circuit électrique (28) relié pour recevoir des signaux (26a, 26b) en provenance des capteurs (18) et pour comparer deux ou plusieurs desdits signaux (26a, 26b) et, dans le cas où une différence entre les signaux comparés (26a, 26b) dépasse une valeur prédéterminée, pour mettre sous tension une alarme (32)
**caractérisé en ce que** les signaux (26a, 26b) sont comparés pour déterminer des modifications de la différence de températures entre les zones (a, b) surveillées, et où l'objet surveillé est un moteur à combustion.

2. Système d'alarme incendie selon la revendication 1, **caractérisé en outre en ce que** les différentes zones (a, b) sont sur des côtés opposés de l'objet surveillé (2).

3. Système d'alarme incendie selon la revendication 1, **caractérisé en outre en ce que** chacun des capteurs optiques (18) comprend un objectif (20) placé dans la zone surveillée, ainsi qu'un générateur distant (22) de signal sensible à la lumière.

4. Système d'alarme incendie selon l'une quelconque des revendications 1 à 3, **caractérisé en outre en ce qu'**une fibre conductrice de lumière (24) est disposée pour transporter la lumière depuis l'objectif (20) jusqu'au générateur distant de signal (22).

5. Système d'alarme incendie selon l'une quelconque des revendications précédentes, **caractérisé en outre en ce que** les capteurs optiques (18) sont espacés l'un de l'autre autour d'un moteur thermique dans un compartiment moteur d'aéronef.

6. Système d'alarme incendie selon l'une quelconque des revendications précédentes, **caractérisé en outre en ce que** l'objet surveillé (2) est une structure comprenant une pièce d'un quelconque moteur principal, y compris une turbine à gaz ou des moteurs à combustion interne tels que ceux adaptés à des véhicules particuliers.

7. Système d'alarme incendie selon l'une quelconque des revendications 1 à 4, **caractérisé en outre en ce que** l'objet surveillé est une structure comprenant une pièce de chambre de combustion.
